# EUROPÄISCHE PATENTSCHRIFT

(11) **EP 2 409 047 B1**
(45) Veröffentlichungstag und Bekanntmachung des Hinweises auf die Patenterteilung: **16.10.2013**
(21) Anmeldenummer: 10710299.8
(22) Anmeldetag: 19.03.2010
(51) Int. Cl.: F16C 33/46, F16C 19/36

(54) **WÄLZLAGERKÄFIG MIT FÜHRUNGSMITTELN**
RETAINER FOR A ROLLING ELEMENT BEARING HAVING GUIDE MEANS
CAGE DE PALIER À ROULEMENT AVEC MOYENS DE GUIDAGE

(30) Priorität: 20.03.2009 DE 102009014276
(43) Veröffentlichungstag der Anmeldung: 25.01.2012
(73) Patentinhaber: Schaeffler Technologies AG & Co. KG, 91074 Herzogenaurach (DE)
(72) Erfinder: GEBAUER, Rainer, 96049 Bamberg (DE)
(86) Internationale Anmeldenummer: PCT/EP2010/053629
(87) Internationale Veröffentlichungsnummer: WO 2010/106172

(56) Entgegenhaltungen:
- EP-A1- 0 457 020
- DE-A1- 3 902 937
- DE-A1- 4 232 433
- DE-A1-102007 009 811
- US-A- 2 946 633

## Beschreibung

### Gebiet der Erfindung

Die vorliegende Erfindung betrifft einen Käfig für ein Wälzlager mit taschenförmigen Ausnehmungen für die Aufnahme von Wälzkörpern sowie mit wenigstens einem Führungsmittel, welches zur Führung des Käfigs beiträgt und lösbar mit dem Käfig verbunden ist.

### Hintergrund der Erfindung

Die Führung eines Käfigs in einem montierten Wälzlager ist in der Regel notwendig, um diesen während des Betriebs in seiner Funktionsposition exakt und zuverlässig zu den Laufringen des Wälzlagers beziehungsweise zu Teilen der Anschlusskonstruktion (beispielsweise eine Welle oder ein Gehäuse) zu positionieren. Dadurch wird eine exakte Positionierung der Wälzkörper und somit eine einwandfreie Funktion des Wälzlagers gewährleistet. Es sind je nach Anwendungsfall und Bauart des Wälzlagers bzw, dessen Käfigs ein oder auch mehrere Führungsmittel möglich.

Wälzlager, die mit Käfigen ohne entsprechende Führungsmittel ausgestattet sind, neigen zum schnelleren Verschleiß sowie stärkeren Laufgeräuschen und erfordern überdies eine aufwendig gestaltete Käfigführung in der das Wälzlager umgebenden Anschlusskonstruktion.

In der DE 10 2006 022 951 A1 ist ein Käfigsegment für einen Käfig eines Wälzlagers beschrieben. Dieses weist im Bereich der taschenförmigen Ausnehmungen für die Aufnahme von Wälzkörpern zungenartige Führungsmittel auf, die einstückig mit dem Käfigsegment verbunden sind. Die Führungsmittel dienen unter anderem als Abstützelemente, um den Käfig, beispielsweise im Fall einer temperaturbedingten Ausdehnung, gegenüber der Laufbahn eines Außenrings abzustützen.

Das Vorsehen von Führungsmitteln an dem Käfig eines Wälzlagers erschwert jedoch dessen Fertigung und macht diesen aufwendig sowie teuer. Des Weiteren ist auch die Flexibilität hinsichtlich der Ausgestaltung der Führungsmittel eingeschränkt, da man beispielsweise hinsichtlich der Wahl des Werkstoffs bereits auf den Werkstoff des Käfig-Grundkörpers beschränkt ist.

Aus der DE 10 2007 009 811 A1 ist ein mehrteiliger Axialkäfig für ein Großwälzlager bekannt, wobei der Käfig aus mehreren Flachbandabschnitten zusammengesetzt ist, welche Freiräume zur Aufnahme von als gesonderte Bauteile hergestellte Käfigfester aufweisen. Diese Käfigfenster sind in alle Freiräume der Flachbandabschnitte eingeklipst und dienen selbst zur Aufnahme von jeweils einem Wälzkörper. Die Käfigfenster weisen an einer schmalen Stirnseite jeweils einen Führungsbord auf, mit dem der Käfig an einem benachbarten Lagerbauteil führbar ist. Die dadurch erzeugte große Anzahl der Führungsborde erscheint überdimensioniert, was nachteilig zu erhöhten Herstellkosten führt.

Einen dazu ähnlichen Aufbau weist der Käfig gemäß der EP 0 457 020 A1 auf, bei dem die Käfigfenster jedoch axial wechselseitig in die Freiräume des Käfigs eingesetzt sind.

### Aufgabe der Erfindung

Der Erfindung liegt die Aufgabe zu Grunde, einen Käfig der gattungsgemäßen Art bereitzustellen, welcher kostengünstig herstellbar ist und hinsichtlich der Ausgestaltung seiner Führungselemente verbessert ist. Außerdem soll der Käfig dazu geeignet sein, seinen Drehwiderstand im Wälzlager zu beeinflussen.

### Zusammenfassung der Erfindung

Die Erfindung geht daher aus von einem Käfig für ein Wälzlager mit taschenförmigen Ausnehmungen für die Aufnahme von Wälzkörpern sowie mit wenigstens einem Führungsmittel, welches zur Führung des Käfigs beiträgt und lösbar mit dem Käfig verbunden ist. Zur Lösung der gestellten Aufgabe ist vorgesehen, dass zwischen wenigstens zwei taschenförmigen Ausnehmungen wenigstens eine weitere Ausnehmung zur Aufnahme des wenigstens einen Führungsmittels vorhanden ist, dass das wenigstens eine Führungsmittel einen Körper mit einer im Grundriss in etwa rechteckigen, länglichen Form aufweist, und dass der Körper mit einer Ausnehmung versehen ist, innerhalb der wenigstens ein flexibles Bauteil angeordnet ist, welches gegenüber dem Wälzkreis-Durchmesser der Wälzkörper ein Übermaß aufweist.

Somit steht eine einfache, kostengünstige sowie flexible Konstruktion für die Führung des Käfigs bereit, wobei verschiedenste Käfigformen und Käfigabmessungen realisierbar sind. Durch die Lösbarkeit des Führungsmittels können der Käfig und das Führungsmittel getrennt voneinander gefertigt werden, welches die Fertigung sowohl des Käfigs als auch des Führungsmittels erleichtert und die Kosten senkt. Überdies kann der Werkstoff des Führungsmittels an spezielle Anwendungsfälle angepasst und unabhängig vom Werkstoff des Käfigs ausgewählt werden.

Dadurch, dass der in etwa rechteckige Körper des Führungsmittels mit einer Ausnehmung versehen ist, wird durch diese einerseits eine gewünschte Gewichtseinsparung erreicht, und außerdem dient diese Ausnehmung zur Aufnahme eines flexiblen Bauteils, welches bei seiner Positionierung gegenüber dem Wälzkreis-Durchmesser der Wälzkörper ein Übermaß aufweist. Durch diese baulichen Maßnahmen können besondere Anforderungen bezüglich der Dämpfung und des Drehwiderstandes eines mit dem erfindungsgemäßen Käfig ausgestatteten Wälzlagers erfüllt werden. Durch das Übermaß wird bewirkt, dass bei eingebautem Wälzlager ein Druck auf zumindest einer seiner Laufringe ausgeübt wird und damit eine Erhöhung des Reibmomentes einhergeht.

Eine gezielte Einstellung des Drehwiderstandes beziehungsweise der Dämpfungseigenschaften mittels des erfindungsgemäß ausgebildeten Käfigs kann durch die Wahl entsprechender Werkstoffe erfolgen. Es ist aber auch möglich, eine solche Einstellung durch wenigstens ein in das flexible Bauteil integriertes Federelement zu bewerkstelligen.

Gemäß einer vorteilhaften Weiterbildung ist vorgesehen, dass das Führungsmittel mit dem Käfig verklipst bzw. verrastet ist. Dadurch lässt sich das Führungsmittel bei dessen Herstellung besonders einfach mit dem Käfig verbinden.

Eine andere Ausgestaltung sieht vor, dass mehrere weitere Ausnehmungen zur Aufnahme von Führungsmitteln gleichmäßig an dem Umfang des Käfigs verteilt angeordnet sind, wobei jeweils eine taschenförmige Ausnehmung und eine solche weitere Ausnehmung abwechselnd angeordnet sind. Hierdurch kann die Führung des Käfigs um seinen gesamten Umfang optimiert werden, wobei die Ausgestaltung der einzelnen Führungsmittel weniger aufwendig gestaltet werden muss, als wenn nur ein Führungsmittel eingesetzt würde.

Es hat sich hinsichtlich der Führungseigenschaften, einer guten Herstellbarkeit sowie einer guten Montierbarkeit des Käfigs als vorteilhaft erwiesen, dass das Führungsmittel einen Körper mit einer im Grundriss in etwa rechteckigen, länglichen Form aufweist. Bevorzugt ist dieser in etwa rechteckige Körper des Führungsmittels an seinen Seitenwänden jeweils mit wenigstens einer Rastanformung versehen.

Zur Verbesserung der Positionierung und Lagefixierung des Führungsmittels am Käfig kann vorgesehen sein, dass der in etwa rechteckige Körper des Führungsmittels mit einer Nut versehen ist, welche zur wenigstens teilweisen Aufnahme eines Teils des Käfigs dient. Dabei kann die Nut vorteilhaft in der Draufsicht in etwa bogenförmig oder hakenförmig ausgebildet sein.

Insbesondere zur Führung des Käfigs auf einer Welle (Anschlusskonstruktion) ist es vorteilhaft, wenn der in etwa rechteckige Körper des Führungsmittels mit wenigstens einer Führungsfläche versehen ist, die in der Montageposition des Führungsmittels am Käfig radial innen liegend angeordnet und in etwa parallel zur Axialrichtung des Käfigs ausgerichtet ist.

### Kurze Beschreibung der Zeichnung

- Figur 1: eine perspektivische Ansicht eines erfindungsgemäßen Lagerkäfigs mit einem eingesetzten Führungsmittel, wobei nur ein Teil des Käfigs dargestellt ist,
- Figur 2: eine perspektivische Darstellung eines Führungsmittels, und
- Figur 3: einen Längsschnitt des auf einer Anschlusskonstruktion montierten Lagerkäfigs gemäß Schnittansicht III in Figur1, wobei die Anschlusskonstruktion in Figur1 nicht gezeigt ist.

### Detaillierte Beschreibung der Zeichnung

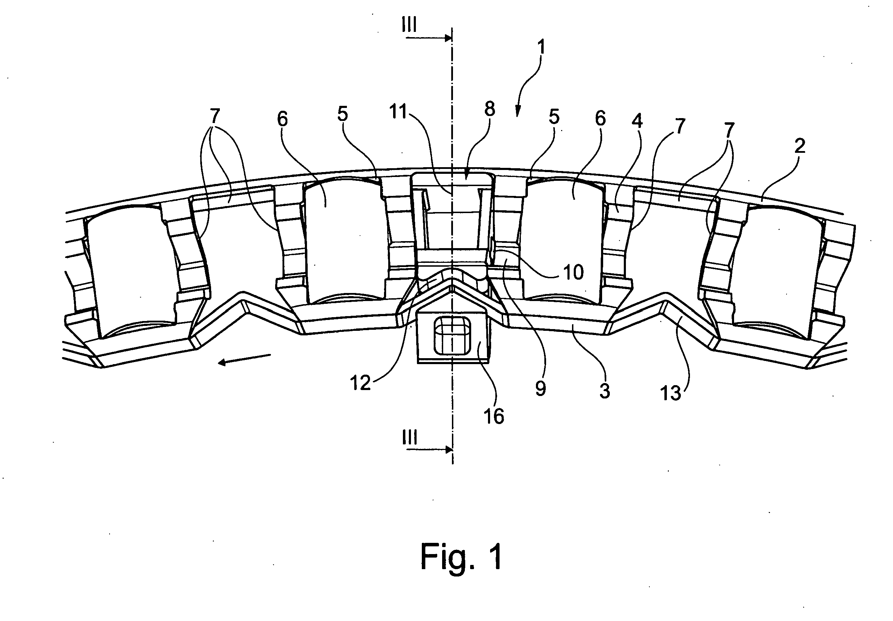

Zunächst wird auf Figur 1 Bezug genommen. Darin ist in einer axialen Teilansicht ein erfindungsgemäßer Lagerkäfig 1 ersichtlich, welcher einen Außenring 2 und einen Innenring 3 aufweist. Außenring 2 und Innenring 3 sind über Stege 4 miteinander verbunden, wobei die Stege 4 über den Umfang des Lagerkäfigs 1 gleichmäßig beabstandet angeordnet sind. Dadurch sind zum einen taschenartige Ausnehmungen 5 zur Aufnahme von rollenförmigen Wälzkörpern 6 und zum anderen weitere Ausnehmungen 7 zur Aufnahme von Führungsmitteln 8 gebildet. Die taschenartigen Ausnehmungen 5 und die weiteren Ausnehmungen 7 sind über den Umfang verteilt abwechselnd angeordnet. Im gezeigten Ausführungsbeispiel ist jedoch nur eine Ausnehmung 7 mit einem Führungsmittel 8 bestückt.

Die Stege 4 weisen in der dem Pfeil entsprechenden Umfangsrichtung betrachtet in etwa die Form einer Senke mit mehreren stufenförmigen Abschnitten und einem tiefsten, unten liegenden Abschnitt 9 auf.

Das gezeigte Führungsmittel 8 ist von der Unterseite des Lagerkäfigs 1 nach oben in eine Ausnehmung 7 eingeschoben und mittels zweier Rastelemente 10, von denen nur eines sichtbar ist, gegen den Abschnitt 9 verrastet beziehungsweise verklipst. Es ist ersichtlich, dass die Form des Führungsmittels 8 im Grundriss gesehen in etwa an die Form der Ausnehmung 7 angepasst und in etwa rechteckig ausgebildet ist.

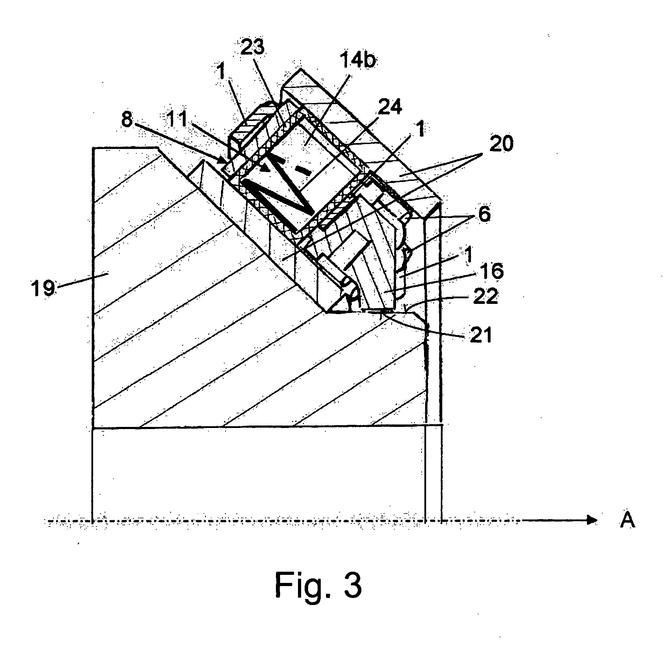

Des Weiteren ist erkennbar, dass das Führungsmittel 8 in etwa im Bereich zwischen den beiden Ringen 2, 3 des Lagerkäfigs 1 eine Ausnehmung 11 aufweist. Diese Ausnehmung 11 kann beispielsweise zur Aufnahme eines flexiblen Bauteils dienen, worauf noch im Zusammenhang mit Fig. 3 eingegangen wird.

Im Bereich des Innenrings 3 des Lagerkäfigs 1 ist das Führungsmittel 8 mit einer Nut 12 versehen, die zur Aufnahme eines Teils 13 des Innenrings 3 dient. Dieses Teil 13 ist im gezeigten Ausführungsbeispiel in der Draufsicht haken- bzw. dachförmig ausgebildet. Für das Teil 3 sind natürlich auch andere Formen möglich, beispielsweise eine gebogene Form. Die dargestellte Form erhöht sowohl in Umfangsrichtung wie auch in Radialrichtung den Halt des Führungsmittels 8 am Lagerkäfig 1.

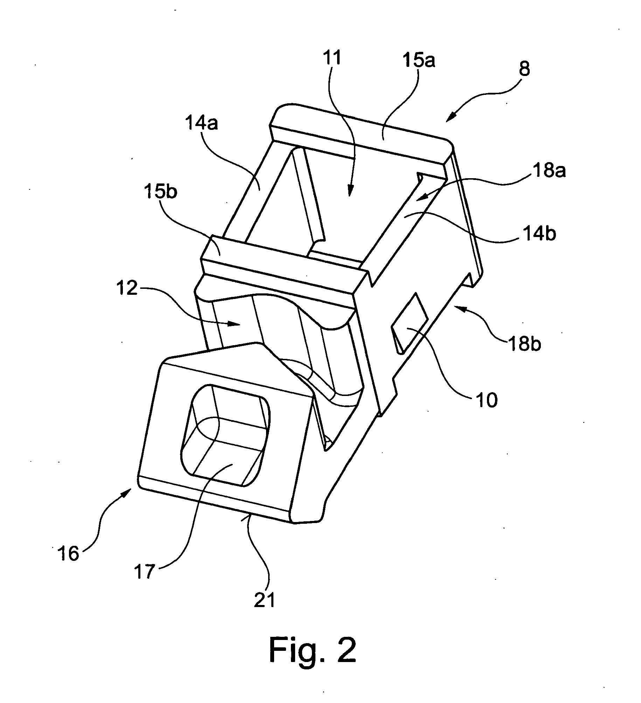

Nunmehr wird Bezug auf Figur 2 genommen, in der das Führungsmittel 8 in Alleinstellung und perspektivisch in stark vergrößerter Ansicht dargestellt ist. Deutlich erkennbar ist die Ausnehmung 11, welche durch zwei Seitenwände 14a, 14b sowie zwei Stirnwände 15a, 15b begrenzt ist. An den Außenflächen der Seitenwände 14a, 14b befindet sich jeweils das bereits erwähnte Rastelement 10, wobei auch hier aufgrund der gewählten Ansicht nur eines erkennbar ist.

Von der radial inneren Stirnwand 15b radial nach innen ausgehend, ist die Nut 12 erkennbar, in die in der Montageposition des Führungsmittels 8 das Teil 13 des Innenrings 3 des Lagerkäfigs 1 eingreift. Ferner wird durch die Nut 12 ein radial innen liegendes Endstück 16 gebildet, welches mit einer in der Montageposition des Führungsmittels 8 radial nach innen weisenden Mulde 17 versehen ist. Ferner weist das Endstück 16 eine Führungsfläche 21 auf, deren Funktion später erläutert wird. Die beiden Seitenwände 14a und 14b weisen jeweils eine geringere Höhe auf als die beiden Stirnwände 15a und 15b, wodurch etwa rechteckförmige Ausnehmungen 18 am Führungsmittel 8 gebildet sind.

Die Figur 3 zeigt eine Schnittdarstellung gemäß Schnittansicht III-III in Figur 1, wobei in Figur 3 zusätzlich noch eine Anschlusskonstruktion mit einer radial innen angeordneten Welle 19 sowie mit Lagerringen 20 dargestellt sind. Ferner ist ersichtlich, dass in der dargestellten Montageposition des erfindungsgemäßen Lagerkäfigs 1 das radial innen liegende Endstück 16 mit der radial ausgerichteten Führungsfläche 21 gegen einen radialen Außenabsatz 22 der Welle19 führend anliegt. Die Führungsfläche 21 ist dabei in etwa parallel zu einer Axialrichtung A des Lagerkäfigs ausgerichtet.

Des Weiteren ist ein flexibles Bauteil 23 dargestellt, welches in die schon erwähnte Ausnehmung 11 des Führungsmittels 8 eingelassen ist und gegenüber dem Wälzkreis-Durchmesser der Wälzkörper 6 ein Übermaß aufweist. Dadurch drückt im Montagezustand das flexible Bauteil 23 gegen die beiden Lagerringe 20, was zu einer Erhöhung des Reibmomentes beziehungsweise der Dämpfung führt. Dieser Effekt kann durch die Wahl unterschiedlicher, geeigneter Werkstoffe eingestellt werden. Es ist aber auch möglich, dies durch den Einsatz eines zusätzlichen Federelementes 24 zu bewerkstelligen, welches innerhalb des flexiblen Bauteils 23 angeordnet und lediglich angedeutet ist. Das flexible Bauteil 23 kann auch ein mit Schmierstoff getränkter Filz sein.

Selbstverständlich ist auch die Herstellung des Führungsmittels 8 auf unterschiedliche Art und Weise möglich. So kann dieses ein Kunststoff-Spritzteil oder ein spanend gefertigtes Hartgewebeteil oder auch als Blech-Formteil hergestellt sein.

### Bezugszeichenliste

- 1: Lagerkäfig
- 2: Außenring
- 3: Innenring
- 4: Stege
- 5: Taschenartige Ausnehmungen
- 6: Wälzkörper
- 7: Weitere Ausnehmungen
- 8: Führungsmittel
- 9: Tiefster, unten liegender Abschnitt der Stege
- 10: Rastelement
- 11: Ausnehmung
- 12: Nut
- 13: Teil vom Innenring 3
- 14a: Seitenwand des Führungsmittels
- 14b: Seitenwand des Führungsmittels
- 15a: Stirnwand des Führungsmittels
- 15b: Stirnwand des Führungsmittels
- 16: Radial innen liegendes Endstück
- 17: Mulde
- 18a: Ausnehmungen
- 18b: Ausnehmungen
- 19: Welle
- 20: Lagerringe
- 21: Führungsfläche
- 22: Radialer Außenabsatz der Welle 19
- 23: Flexibles Bauteil
- 24: Federelement
- A: Axialrichtung des Lagerkäfigs

## Patentansprüche

1. Käfig (1) für ein Wälzlager mit taschenförmigen Ausnehmungen (5) für die Aufnahme von Wälzkörpern (6) sowie mit wenigstens einem Führungsmittel (8), welches zur Führung des Käfigs (1) beiträgt und lösbar mit dem Käfig (1) verbunden ist, **dadurch gekennzeichnet, dass** zwischen wenigstens zwei taschenförmigen Ausnehmungen (5) wenigstens eine weitere Ausnehmung (7) zur Aufnahme des wenigstens einen Führungsmittels (8) vorhanden ist, dass das wenigstens eine Führungsmittel (8) einen Körper mit einer im Grundriss in etwa rechteckigen, länglichen Form aufweist, und dass der Körper mit einer Ausnehmung (11) versehen ist, innerhalb der wenigstens ein flexibles Bauteil (23) angeordnet ist, welches gegenüber dem Wälzkreis-Durchmesser der Wälzkörper (6) ein Übermaß aufweist.

2. Käfig nach Anspruch 1, **dadurch gekennzeichnet, dass** das Führungsmittel (8) mit dem Käfig (1) verklipst ist.

3. Käfig nach Anspruch 1 oder 2, **dadurch gekennzeichnet, dass** mehrere weitere Ausnehmungen (7) zur Aufnahme von Führungsmitteln (8) gleichmäßig um den Umfang des Käfigs (1) verteilt angeordnet sind, wobei jeweils eine taschenförmige Ausnehmung (5) und eine weitere Ausnehmung (7) abwechselnd angeordnet sind.

4. Käfig nach einem der vorherigen Ansprüche, **dadurch gekennzeichnet, dass** der in etwa rechteckige Körper des Führungsmittels (8) an seinen Seitenwänden (14a, 14b) jeweils mit wenigstens einem Rastelement (10) versehen ist.

5. Käfig nach einem der vorherigen Ansprüche, **dadurch gekennzeichnet, dass** in das flexible Bauteil (23) wenigstens ein Federelement (24) integriert ist.

6. Käfig nach einem der vorherigen Ansprüche, **dadurch gekennzeichnet, dass** der in etwa rechteckige Körper des Führungsmittels (8) mit einer Nut (12) versehen ist, welche zur wenigstens teilweisen Aufnahme eines Teils (13) des Käfigs (1) dient.

7. Käfig nach einem der vorherigen Ansprüche, **dadurch gekennzeichnet, dass** die Nut (12) in der Draufsicht in etwa bogen- oder hakenförmig ausgebildet ist.

8. Käfig nach einem der vorherigen Ansprüche, **dadurch gekennzeichnet, dass** der in etwa rechteckige Körper des Führungsmittels (8) mit wenigstens einer Führungsfläche (21) versehen ist, die in der Montageposition des Führungsmittels (8) am Käfig (1) radial innen liegend angeordnet und in etwa parallel zur Axialrichtung (A) des Käfigs (1) ausgerichtet ist.

## Claims

1. A cage (1) for a rolling bearing, having pocket-shaped recesses (5) for receiving rolling bodies (6) and having at least one guide means (8) which assists in guiding the cage (1) and is detachably connected to the cage (1), **characterized in that**, between at least two pocket-shaped recesses (5), at least one further recess (7) is present for receiving the at least one guide means (8), **in that** the at least one guide means (8) has a body with an approximately rectangular, elongate outline shape, and **in that** the body is provided with a recess (11) within which there is arranged at least one flexible component (23) which has an oversize with respect to the pitch circle diameter of the rolling bodies (6).

2. Cage according to Claim 1, **characterized in that** the guide means (8) is clipped to the cage (1).

3. Cage according to Claim 1 or 2, **characterized in that** a plurality of further recesses (7) for receiving guide means (8) are arranged so as to be distributed uniformly about the circumference of the cage (1), wherein in each case one pocket-shaped recess (5) and one further recess (7) are arranged in an alternating fashion.

4. Cage according to one of the preceding claims, **characterized in that** the approximately rectangular body of the guide means (8) is provided with in each case at least one latching element (10) on its side walls (14a, 14b).

5. Cage according to one of the preceding claims, **characterized in that** at least one spring element (24) is integrated into the flexible component (23).

6. Cage according to one of the preceding claims, **characterized in that** the approximately rectangular body of the guide means (8) is provided with a groove (12) which serves to at least partially receive a part (13) of the cage (1).

7. Cage according to one of the preceding claims, **characterized in that** the groove (12) is of approximately arc-shaped or hook-shaped design in plan view.

8. Cage according to one of the preceding claims, **characterized in that** the approximately rectangular body of the guide means (8) is provided with at least one guide surface (21) which is arranged radially at the inside, and maligned approximately parallel to the axial direction (A) of the cage (1), when the guide means (8) is in the assembled position on the cage (1).

## Revendications

1. Cage (1) pour un palier à roulement, comprenant des évidements (5) en forme de poches pour le logement de corps de roulement (6) et comprenant au moins un moyen de guidage (8) qui contribue au guidage de la cage (1) et est relié de manière amovible à la cage (1), **caractérisée en ce qu'**au moins un évidement supplémentaire (7) pour le logement de l'au moins un moyen de guidage (8) est prévu entre au moins deux évidements (5) en forme de poches, **en ce que** l'au moins un moyen de guidage (8) comprend un corps de forme allongée et approximativement rectangulaire en vue en plan, et **en ce que** le corps est pourvu d'un évidement (11) à l'intérieur duquel est disposé au moins un composant flexible (23) qui présente une surdimension par rapport au diamètre du cercle de roulement des corps de roulement (6).

2. Cage selon la revendication 1, **caractérisée en ce que** le moyen de guidage (8) est enclipsé sur la cage (1).

3. Cage selon la revendication 1 ou 2, **caractérisée en ce que** plusieurs évidements supplémentaires (7) pour le logement de moyens de guidage (8) sont disposés de manière répartie uniformément sur la périphérie de la cage (1), un évidement (5) en forme de poche et un évidement supplémentaire (7) étant à chaque fois disposés en alternance.

4. Cage selon l'une quelconque des revendications précédentes, **caractérisée en ce que** le corps approximativement rectangulaire des moyens de guidage (8) est pourvu, au niveau de ses parois latérales (14a, 14b), d'au moins un élément d'encliquetage (10) respectif.

5. Cage selon l'une quelconque des revendications précédentes, **caractérisée en ce qu'**au moins un élément ressort (24) est intégré dans le composant flexible (23).

6. Cage selon l'une quelconque des revendications précédentes, **caractérisée en ce que** le corps approximativement rectangulaire des moyens de guidage (8) est pourvu d'une rainure (12) qui sert à loger au moins partiellement une partie (13) de la cage (1).

7. Cage selon l'une quelconque des revendications précédentes, **caractérisée en ce que** la rainure (12) est réalisée, en vue de dessus, approximativement en forme d'arc ou en forme de crochet.

8. Cage selon l'une quelconque des revendications précédentes, **caractérisée en ce que** le corps approximativement rectangulaire du moyen de guidage (8) est pourvu d'au moins une surface de guidage (21) qui est disposée radialement à l'intérieur dans la position de montage du moyen de guidage (8) sur la cage (1) et est orientée approximativement parallèlement à la direction axiale (A) de la cage (1).
